# EUROPEAN PATENT APPLICATION

(11) **EP 3 241 950 A1**
(43) Date of publication of application: **08.11.2017**
(21) Application number: 14909565.5
(22) Date of filing: 30.12.2014
(51) Int. Cl.: E03C 1/044, E03C 1/10, F24D 17/00

(54) **DEVICE AND WATER SYSTEM FOR PREVENTING THE PROLIFERATION OF LIVING BEINGS IN WATER PIPES**

(71) Applicant: Aquareturn, S.L., 03015 Alicante (ES)
(72) Inventor: CUERVO-ARANGO Y DE CACHAVERA, Alfonso, E-03015 Alicante (ES)
(74) Representative: Carlos Hernando, Borja
(86) International application number: PCT/ES2014/070997
(87) International publication number: WO 2016/107937

(57) **Abstract**

The invention relates to a device and water system for preventing the proliferation of living beings in the water pipes of buildings, in particular a device that can be applied to taps with a supply of hot and cold water, the objective of which is to improve the health standards of public and private constructions with hot water circulation systems, or without, preferably hotels, hospitals and houses or dwellings, by means of recirculation within the hot, warm or cold water system. In addition, the same permits the prevention of the freezing of the piping. The device is of the type that comprises a bypass between the hot and cold water pipes that supply a tap, with a pump that causes a recirculation of the water via said bypass, means for regulating the flow of water located in the bypass, a temperature probe in the water pipe above the bypass, means for activating and deactivating the pump, and a system for controlling the flow regulation means, the activation and deactivation of the pump and the functioning of said pump.

## Description

### OBJECT OF THE INVENTION

The invention relates to a device and water system for preventing the proliferation of living beings in the water pipes of buildings, in particular a device that can be applied to taps with a supply of hot and cold water, the objective of which is to improve the health standards of public and private constructions with hot water circulation systems, or without, preferably hotels, hospitals and houses or dwellings, by means of recirculation within the hot, warm or cold water system.

In hot water circulation systems there is a high risk of proliferation of living beings, for example Legionella, especially in blind branches, wherein a lack of movement of water produces a stagnation of the same at an ideal temperature for a breeding ground for said living beings, such as bacteria and other microorganisms. Among other uses or applications, the present invention prevents this stagnation due to the fact that, along with a temperature sensor, it incorporates a control system and a timer and/or programmer in order to flush out the water at the desired rate, making the process automated, thereby avoiding human intervention, or it may be done manually, by means of a push button, thereby avoiding said "permanent bacterial comfort zone". The device, made up of a modular element, has a construction which, among other advantages, facilitates the installation thereof without the need for construction work, in many cases without modifying the pipes, and without having to put external control switches on the device, given the danger of these moist areas, reducing the cost of the installation and the reliability thereof. By means of the recirculation of the water, in the water system, the device allows for the injection of hot water to displace the cold water and cold water to displace the hot water.

The invention also relates to a system, with different alternatives and constructions, which contributes to the prevention of water stagnation in pipes and blind branches where the aforementioned living beings proliferate, consisting mainly of bacteria and microorganisms, and also carries out a heat shock in the hot and cold water pipes in order to reduce the microbial colonies which may be present inside, in addition to saving water and energy.

By incorporating some additional elements or components, the device also allows tap water to be saved by preventing the waste of energy and water down the drain before reaching the desired temperature and, therefore, said device ensures automatic recirculation, merely by the user opening the hot water tap, the hot water coming from the boiler or from the hot water supply source, until reaching said temperature, which is previously set, or by manually activating it to optionally treat the hot and cold water pipes, regardless of whether they have hot water circulation.

In the present description, the terms "living beings" or "living being" refer to any living being which may be found in hot or cold water pipes, and which may be affected by the treatments described herein, in addition to being sensitive to heat shocks, such as microorganisms, bacteria (Legionella), fungi, algae, lichens, amoebas, paramecia, protozoa, viruses or similar.

The field of application of the present invention is focused on the sector of hot and cold water systems, both for homes and for publicly used buildings, hotels and hospitals, as well as industrial buildings.

### BACKGROUND OF THE INVENTION

In the state of the art, the problem of the proliferation of living beings, such as the well-known Legionella bacteria, among others, in water systems, mainly in hot water circulation systems in hotels, hospitals and large houses, but also in dwellings with little water renewal, is known. Living beings proliferate mainly in the blind branches, where a lack of movement of the water causes a stagnation of the same. A blind branch must be understood as one which ends in a tap, normally closed, supplied by the main water line. Said blind branches normally coincide with the bathrooms of the rooms of a hotel or a hospital, or in large houses in rooms which may be unoccupied for extended periods of time such that the bathrooms or sinks are not used during said extended period of time, therefore leading to conditions in said blind branches with ideal temperatures for the proliferation of living beings, in particular, Legionella.

Given that hot water circulation pipes are usually at a temperature above 50°C, and yet the most comfortable temperature in rooms and bathrooms is approximately 20°C, there is an intermediate risk area (ZR) for microbial proliferation, wherein said living beings, which are usually microorganisms, find an ideal habitat for their development.

Until now, different measures have been used to fight the proliferation of said living beings:
- Chemical treatment of the water, mainly by means of sodium hypochlorite, to lower the pH of the water, and/or
- Heating the water circuit to above 70°C, in order to vary the conditions of the water, even in the blind branches.

The main problems with these measures are the premature oxidation of the pipes and a reduction in the life of the same, regardless of the material they are made of, metal or plastic. With regard to irregularities, oxide craters and/or micro-cracks caused by these treatments, it is probable that living beings find shelter therein, or that sediment deposits are produced, under which said living beings may find protection from successive attacks.

The present invention fights against the proliferation of living beings, living beings such as Legionella and other microorganisms, in blind branches, and even before the Legionella colonies are formed, as an additional measure to known treatments, or as a substitution thereof without using any type of chemical treatment or modifying the existing water circuit, making the recirculation of water possible.

In turn, one modification to the device, object of the invention, is also intended for the market to save water and reduce the risk of the pipes freezing in cold places, since if the system detects a water temperature below a temperature at which freezing may occur, recirculation is activated, thereby preventing the pipes from freezing, at least in the circulation of the water in this system. In the state of the art, there are different solutions to the problem of saving water by means of several different devices, such as thermostatic taps, flow-reducing heads, complex remodeling of systems to achieve a recirculation of water and even modular devices which share some of the objectives of the modified device, object of the present application. Although some of said devices satisfactorily comply with the aim for which they were designed, the same have certain aspects which could be improved upon, specifically, the simplification of the construction thereof, which is reason why the present device was developed, in which, by modifying the position of the flow meter, it is no longer necessary to incorporate a pressure switch and, therefore, by including fewer elements the device is more affordable and easier to install, without losing effectivity.

Thus, by changing the location of the flow meter or any pressure or flow measuring device, placing it within the water circulation circuit instead of after the same, the flow is detected at the opening of the tap, and the flow of recirculation during the process and/or if water stops flowing is also detected, so that the system may be stopped.

In the state of the art, the proliferation of living beings in pipes and blind branches, and mainly those arranged between the hot water circulation pipes and the branch which feeds the taps, is only prevented, as previously stated, by overheating the system or by applying chemical products to the water of the system, both actions compulsorily and periodically carried out over specific periods of time. Moreover, it is currently possible to open the tap of the branch in question and keep it open for a certain period of time until the water contained in the hot water branch has been emptied and the branch has become filled again with hot water during an additional time and until the water comes out at a temperature which guarantees at least a temperature that is far from the temperature in which living beings may proliferate or which guarantees the cauterization thereof for at least a specific time period. This last action in buildings with many taps in different rooms, such as hotels and hospitals, could be done manually and only for hot sanitary water pipes and not for the cold water pipes, having one person access all of the rooms every so often and open the taps, but this is obviously not an optimal and efficient solution with guarantees, since the person will lose a lot of time opening the tap and waiting for hot water to come out, and furthermore, the human error factor could result in a certain branch not being opened. This problem is especially important after a period of inactivity of the building, especially in seasonal hotels and residences.

### DESCRIPTION OF THE INVENTION

Thus, the device for preventing the proliferation of living beings, in addition to water stagnation, and also for saving water and energy in taps and reducing the risk of the pipes freezing, is a device which acts automatically if no one has opened a tap for a specific period of time, by means of a timer which acts to prevent the stagnation of water in the branches of the system in which it has been placed, and which also may be activated by merely opening the tap through conventional means of opening said tap, either mixer taps or the simple opening of a standard tap, and does not require an external push button, switch or the activation of a circuit in order to save water and energy. The device may be also be activated through means for measuring temperature or a sensor, or a timer associated with a temperature sensor in cases in which one wishes to recycle the water of the branch until reaching a previously set temperature. This may also be achieved by activating a push button or switch of the device, which circulates water through the hot sanitary water and cold sanitary water pipes, regardless of whether or not they have recirculation, during the necessary amount of time in order for the microorganisms which may be in the pipes to be cauterized due to the heat produced by the boiler or hot water source.

An object of the invention is therefore a device according to the first claim. Other aspects of this first object are found in dependent claims 2 to 11.

Said first object of the invention relates to a device which is to be placed in systems with hot water circulation, or without, in order to improve the health standards of public and private constructions, among other applications, thereby preventing the proliferation of living beings. This device, made up of a single module, avoids the stagnation of water and the proliferation of living beings in a determined risk area (ZR) and, in some cases, even in cold water pipes, by being placed on a branch of the water system, preferably one formed by a hot water pipe and a cold water pipe which end in a tap. Specifically, said module is arranged between the tap and the two mentioned pipes, the device joined to the pipes and to the tap by connections, and comprising on the inside thereof two sections of pipe, one preferably hot water and the other preferably cold water, which are connected by means of the connections with the hot water pipe and the cold water pipe, as well as the connections corresponding to the tap, and a water recirculation pump, first flow regulation means, a temperature sensor and second flow regulation means, all arranged in series on a bypass line located between the two sections of pipe, as well as a control system connected to the pump and first regulation means, said control system comprising a first timer to periodically and automatically activate the pump and first flow regulation means, if water has not been drawn during an established period of time. The device may also be activated by means of a temperature sensor, an activation/deactivation push button located on the device, and/or the opening and closing of the water tap. The timer allows the user to program a periodic water flush, for example, daily or weekly, in order to avoid the "permanent comfort zone of living beings, or risk area", if no one has used the water during the established time period. Likewise, in hot water circulation systems, it is possible to annul the recirculation of the hot water circulation loop, not of the device, object of the invention, to avoid said optimal temperature which provides perfect conditions to create a "breeding ground for living beings", thereby reducing the risk of proliferation of colonies of living beings in the hot water blind branches, by going from a high risk hot water circulation system to the instant protection of a low risk hot water system.

The control system, associated with the different electrical/electronic components for specifically regulating the functioning of the same and regulating the function of the water recirculation device in general, such as the pump, the temperature regulation means, or temperature sensor, flow regulation means, the timer and the push button, among others, allows the user to control and record the temperatures, cycles and flows. Said control system may be connected to a server, through a communications port, either through a network or wirelessly, with the aim of being able to track the data registered as well as to remotely manage the device. By remotely controlling the control system of the device, object of the invention, the activation and deactivation thereof is made possible from a control center, a mobile device, a remote control, etc.

Through the connection of the control system to a remote server, it is possible to manage, control and record data, mainly of the temperature, of the pipes, rings and blind branches (as well as the periodic openings thereof) of a system in which the device is installed. Likewise, the control system may be connected to a heat source, usually a boiler, and contribute to regulating the temperature of the heat source to ensure that the target temperature of the system is reached at all points of the same. For example, if the temperature of the system at one point is lower than the specific target temperature, the control system connected to the boiler (to the control system of the same, remotely by means of a server or directly) may give instructions to the boiler to increase the temperature of the system, and conversely, lower the temperature of the system if it is greater than the set target temperature.

This type of remote connection is particularly interesting for controlling the temperature of the hot water loop in systems in which it may be mandatory, such as hospitals, hotels and residences, among others. In these systems, it is necessary to measure the temperature of the water at different parts of the circuit or system, such that it may be guaranteed that the system provides water at a set target temperature. In addition to the measurements, it is usually necessary to periodically empty the blind branches. The aforementioned actions of measuring and emptying must be recorded.

By means of the device, object of the invention, it is possible to obtain said temperature records automatically, as well as to empty the branches.

Therefore, the device for preventing the proliferation of living beings in water systems comprises means for activating or starting and deactivating or stopping the same, associated or connected to the control system of the device, which enable the recirculation pump of the device to be activated and deactivated electronically. Said means for deactivating the pump may be combined or not:
- the means for measuring the temperature which stop the pump when said means for measuring the temperature reach a set target temperature kept in the control system, and/or
- a first timer, connected through the control system, which stops the pump after it has been active for a specific period of time without reaching the set target temperature.
In turn, the means for activating the pump of the device may be:
- the means for measuring the temperature which activate the pump when said means for measuring the temperature reach a set target temperature kept in the control system, and/or
- a manual push button connected to the control system situated in the device itself, and/or
- a second timer connected to the control system which operates at every specific set time period in order to periodically and automatically activate the pump, and/or
- at least one remote connector connected to the control system by means of the server.

The device may also be used to recirculate water, whether it be cold, warm or hot water, from the hot water pipes to the cold water pipes, later sending it to the hot water circulation loop, in order to push the cold water contained inside the hot water pipes towards hot water pipe or for recirculating the cold water from the cold water pipes to the hot water pipes, forcing the entry of warm water from the hot water circulation pipes towards the recirculation and the subsequent passage thereof through the boiler, wherein the living beings are cauterized or the water is heated to prevent the freezing thereof. It is also possible to avoid freezing when the boiler is not operating and the recirculation of the water through the pump heats the water.

This way, and by only using already existing cold and hot water pipes, or another return pipe added to the recirculation loop, they are communicated by a section or a bypass line in the device which forms a closed circuit which returns the water, cold or hot, in order to avoid the stagnation of water, preventing the proliferation of living beings, or to prevent the freezing of the water in the pipes.

Another aspect of the invention is, by means of including additional elements or components to the previously described device, to use said device or module as a device for saving water, recirculating hot, warm or cold water based on the temperature thereof, to the boiler or hot water source instead of letting it run into the drain, thereby saving both water and energy. In this case, it is possible to arrange the components of the device on one side or the other of the pump, or even on both, making it possible to save hot water, cold water or both. It may also be used to heat water, as well as hot and cold water pipes, if it detects the possibility of the pipes freezing.

Therefore, a complementary aspect of the invention is a device for saving water and thermal and electric energy (since the warm water no longer goes down the drain, but rather is incorporated into the supply of the system for producing hot water, said system having to make a lower thermal increase, since it is supplied with water at a higher temperature than that coming from the supply network, which saves heating energy), according to claim 8.

This device is formed by a compact module, suitable to be installed preferably without needing to modify or add to the already existing piping, external switches, taps, boilers or hot water sources, and without adding accumulators or deposits, although in some cases it is necessary to use them, being directly applicable to hot water, or hot and cold water, systems, both for homes and publicly used buildings, as well as industrial buildings, and placed only between the hot and cold water intakes or the water valves for the sink, wash basin, shower or bidet, and the corresponding tap thereof, all of the elements of the device being incorporated into the module which is installed next to said tap and for which only one system for supplying hot or cold water is necessary, without using water or energy until the water arrives hot or cold to all of the taps of the bathroom.

Thus, the request for hot or cold water from the tap on which the aforementioned module is installed conditions the water for the rest of the nearby taps.

Specifically, by means of a system with water flow regulation means, valves or solenoid valves, temperature, flow or pressure sensors, together with a pump, included in the module, it is possible to divert the circulation of water not yet heated to the cold water pipe, although in the reverse direction, meaning again towards the inlet of the heating device originally provided in the system. It is also possible to invert the components in the device to achieve cold water instead of hot water in countries where the problem is the opposite of the previously explained problem, in which hot water arrives through the cold water pipes.

Additionally, the water will come out of the tap only when it is at the programmed temperature, defined in the module, which for example could be 35°C when it is hot and 18°C when it is cold, although the temperatures may be adjusted based on the preferences of each market.

Optionally, the device is provided with the existence of an indicator to alert the user to the existence of anomalies, such as if hot water does not come out when opening the tap, as well as to indicate that the "hot water is coming". Likewise, envisaged as an alternative is the existence of an acoustic or light signal. It is worth mentioning that, depending on the pump chosen and the piping installation of the building, it is even possible to reduce the normal waiting time for hot or cold water. Likewise, and also optionally, a second timer may be incorporated in the module to be used not only to save water which has not yet reached the set temperature, but to limit the time in which the hot or cold water comes out of the tap, such that if a predetermined opening time is exceeded, which most likely means that the tap was turned on and that the individual forgot to turn it off, after the established time it automatically closes the water outlet, thereby avoiding a waste of water and energy.

In any case, the main advantages of the device for saving water are the incorporation of a single flow or pressure variation detector or meter which indicates:
A: the intention of getting hot water,
B: the amount of water saved,
C: that water is not arriving,
D: a pressure drop in the complete circuit, and therefore in the state of the same, as well as in the boiler, since by knowing the pressure/flow curve of the pump, said pressure drop may be known.

Said meter, preferably a flow meter or flow sensor or pressure comparing element, although it may be another element, is arranged upstream from the bypass line on the hot water section, a position which avoids the need to include two control regulating means on said hot water supply section, meaning a flow meter downstream from the bypass and another further controlling pressure regulation means, such as with a pressure switch upstream from said bypass. Said flow meter may also be used as a control to incorporate a volume meter for measuring the volume of the water which we have prevented from draining, in order to have this information and offer it to the user.

Combining the data thereby obtained with the temperature of the water which recirculates instead of running down the drain, it is possible to offer data on thermal energy and pumping costs associated with replacing water, which have been avoided by not wasting the water received at the hot or cold water tap until the water really arrives cold or hot.

A second object of the invention is, pursuant to claim 12 and dependent claims 13 to 22, a water system for preventing the proliferation of living beings in a water system and the stagnation of the water in the water pipes of buildings, the system comprising at least a general water service line in the building, a hot water circulation pipe which comes out of said general service line, said hot water pipe, which forms a recirculation loop, beginning and ending before a heat source which is used to heat the water coming from the general service line and supply it to different points of the building, said hot water pipe having a recirculation pump downstream from the heat source and before the main hot water pipe connects again to the general service line. Said system comprises at least one main cold water pipe which comes from the general service line. The system comprises at least one hot water branch which comes from a bypass of the hot water pipe and at least one cold water branch which comes from a bypass of the main cold water pipe, each pair formed by a hot water branch and another cold water branch ending in a tap. Normally the system would have more than one pair of hot and cold water branches, especially in hotels and hospitals, where there is at least one pair of branches for each room.

The second system, object of the invention, likewise comprises a water circulation device situated on at least one hot water branch upstream from the tap connecting said device to at least one hot water branch, or first branch, to another branch or second branch according to the previously described device and according to claims 1 to 11.

On the recirculation device, or independently but connected to the same, said system incorporates activation and deactivation means for the pump of the device, which may coincide or not. For example, it may comprise a second timer or programmer intended to activate the water recirculation device during at least the necessary time, based on the activation of said recirculation device, in order to displace all of the water contained between the bypass in the hot sanitary water (HSW) pipe or recirculation loop of the first branch and the recirculation device, object of the invention. On occasions, the necessary time must be doubled in order to guarantee complete drainage, before the water is contaminated or once contaminated, on the send and return of the loop. By means of a system with the previously described characteristics, it is guaranteed that the water contained in the branch which may contain living beings such as bacteria or microorganisms is completely displaced from said branch to the point of the system where there is a temperature which will exterminate said living beings, bacteria and microorganisms, and wherein the proliferation of the same is not possible, for example in the hot water pipe, the recirculation loop, the heat source or the accumulator. Other alternatives of activation and deactivation means are possible, such as temperature measuring means of the device, to activate or deactivate the same, or a first timer for deactivation, or manual or remote push buttons for activating or deactivating the pump of the device.

Another application of the device, as well as a water bypass system, is a water system for preventing the freezing of the water in the pipes when said system is not in use and in areas with low temperatures. Said system comprises at least a general water service line, a hot water pipe which comes from the general service line, which begins and ends before a heat source for heating water coming from the general service line and which has a recirculation pump downstream from the heat source and before the hot water pipe connects again to the general service line, at least a cold water pipe which comes from the general service line, at least a hot water branch which comes from a bypass of the hot water pipe and at least a cold water branch which comes from a bypass of the cold water pipe, each pair formed by a hot water branch and another cold water branch ending in a tap, likewise comprising a water recirculation device as in claim 1 and which comprises a pump of the device and which is situated in at least one hot water branch upstream from the tap connecting said at least one hot water branch, first branch, with another branch, second branch, and a means for measuring the temperature which activate the pump of the device when the temperature of the water detected by the same is lower than the set temperature which is close to freezing, such that the water of the system is displaced by the pump of the device (74), heating said water and preventing the freezing of the same.

With the previously mentioned characteristics, as well as other additional ones, presented herein are different water systems for preventing the proliferation of living beings and even reducing or eliminating the same, as well as for preventing water stagnation in water pipes of homes and buildings, especially hotels and hospitals.

### DESCRIPTION OF THE DRAWINGS

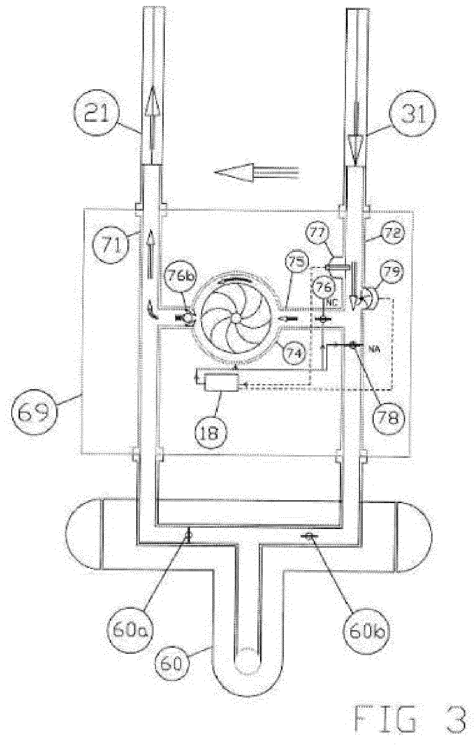

In order to complete the present description, with the aim of making the characteristics of the invention more readily understandable, the present application, by way of illustration and not limitation, is accompanied by the following figures:
Figure number 1 shows a device, object of the invention, for preventing the stagnation of water in Hot Sanitary Water systems (HSW), wherein the main components are shown.
Figure number 2 shows a diagram of an example of the device for thermally treating hot and cold water pipes and also for saving water and energy, wherein the main parts and elements of which it is comprised are shown, as well as the arrangement thereof.
Figure number 3 shows a device, object of the invention, for countries wherein the heat makes it so the water arrives hot through the cold water pipes.
Figures number 4a, 4b and 4c show the operation of the device for hot countries, shown in figure 3.
Figure number 5 shows a first water system for preventing water stagnation in the pipes by means of the recirculation of water in the branches, from the hot water branch which has a permanent recirculation of hot water, to the cold water branch.
Figure number 6 shows a second water system for eliminating the hot water recirculation loop and thereby avoid the stagnation of water in the hot water branches at temperatures in which there is a risk of proliferation of living beings. Likewise, the energy associated with permanent recirculation is reduced and water is not wasted from the time the tap is opened to the time the hot water arrives. To this end, part of the recirculation loop is closed off and, preferably, the water is emptied and pushed from the hot water branch to the cold water branch.
Figure number 7 shows a third water system in buildings for preventing water stagnation in the pipes thereof by means of timed draining of the hot water branches. This example requires the presence of a push button or switch in the device, object of the invention, to be able to leave the hot water tap open without hot water coming out of the same, since the solenoid valve cuts the water until it is necessary to drain the water.
Figure number 8 shows a fourth water system in buildings with hot water recirculation activated for preventing the stagnation of the water in the water pipes thereof by means of recirculation of water in the hot water blind branches, from the bypass branch of the hot water loop to a new return branch, also hot water, thereby displacing the water towards the recirculation loop. In this system, the water is forced to enter at the optimal temperature for a breeding ground so that it enters the hot recirculation pipe and therefore does not produce a stagnation or a proliferation of living beings in the hot water blind branches, and if there are already living beings in the hot water branch, this volume of water is sent to be thermally treated. In this system, the device may or may not comprise non-return valves to make the displacement of water towards the hot recirculation loop of the hot water branch in the direction of the boiler possible, where it will receive a heat shock, once again minimizing the organic load of the water. Likewise, water that was previously lost, when previously the hot water tap was left open until the hot water coming from the recirculation loop reached the tap, will be saved.
Figure number 9 shows a fifth water system in buildings with hot water recirculation turned off in order to convert the permanent hot water recirculation loop into a water recirculation loop which is not yet hot or stagnated so that it returns to the boiler or accumulator and prevents the stagnation of warm water in the blind branches thereof, also saving energy associated with the permanent recirculation of hot water, yet saving water until the hot water reaches the taps.
Figure number 10 shows a sixth water system in buildings for preventing the stagnation and proliferation of living beings in the hot water branch which diverts from the recirculation loop, by means of cold water injection from the cold water branch to the hot water branch. In this system the volume of water existing in the blind branches of hot sanitary water (HSW) is displaced towards the hot recirculation loop and in the direction of the boiler, where the content of microorganisms will be reduced.

### PREFERRED EMBODIMENTS OF THE INVENTION

In light of the aforementioned figures, below is a description of several preferred embodiments of the device, object of the present application, wherein various alternatives of devices are described, as well as water systems and also operation methods of the device and the systems.

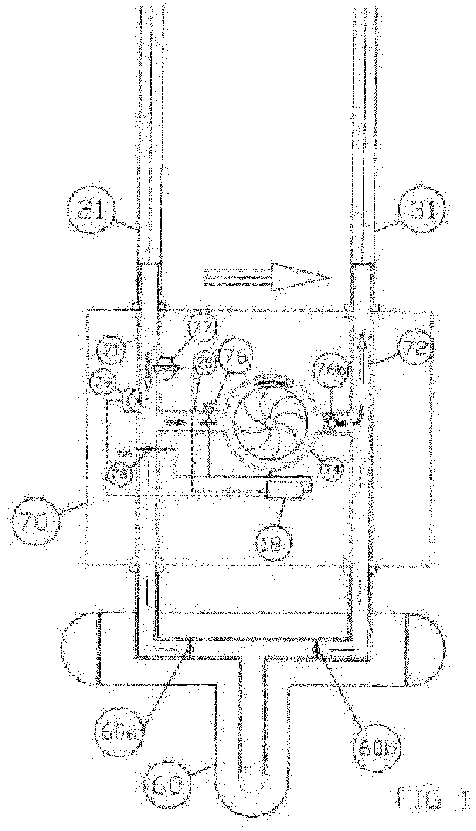

Thus, as observed in **Figure 1****,** the device in question is formed by a single module (70) applicable to be installed between the water valves of the hot water supply pipes (21) and cold water supply pipes (31) and a tap (60) conveniently provided with the respective hot water valves (60a) and cold water valves (60b), essentially made up of the following elements:
- two supply line segments for hot water (71) and cold water (72) which are connected by suitable means to the hot water supply pipes (21) and cold water supply pipes (31) of the tap (60);
- a pump (74) for water recirculation installed in a bypass line (75) which communicates the hot (71) and cold (72) water pipes;

- first water flow regulation means (76), preferably a solenoid valve, situated on the bypass line (75) and in this example on the hot water pump (74), either allowing or not allowing the passage of water (74) to the cold water pipe (72),
- second water flow regulation means or non-return means (76b) situated on the bypass line (75), preferably on the opposite side of the pump (74), wherein the first water flow regulation means (76) are situated, although they may also be situated on the other side,
- first means for measuring temperature, a thermal contact or temperature sensor (77), arranged in the hot water supply pipe (21) upstream from the bypass line (75);
- a control system (18) connected to said first flow regulation means or solenoid valve (76) by means of temperature measurement means (77) and the pump (74), said control system (18) having electronic means for activating and deactivating the pump (74) of the device (70). For example, said activation means may be a second timer (not shown) which may periodically, for example once a day and for 2 minutes, and automatically activate the pump (74), forcing the recirculation of water from the hot water pipe (21) to the cold water pipe (31), thereby preventing the prolonged stagnation of water and, therefore, the proliferation of bacteria. Another activation means may be the temperature sensor (77) which when reaching a previously set temperature in the control system sends a signal to the control system which activates the pump (74) of the device, such that in this case the activation means would not be a second timer, but rather the temperature sensor (77). Other activation means would be, for example, an automatic push button or remote connector which through the control system, would activate the pump. The same occurs with the deactivation means, and the same may be a timer, a temperature sensor, or even an activator, either manual or remote, which would stop the pump (74) of the device (70) by means of the control system.

On the device, the second water flow regulation means (76b) may be either a non-return valve, which prevents the passage of water from the hot water pipe (21) to the cold water pipe (31) by means of the pump (74) or a solenoid valve, in the case that the device is used for the recirculation of water from the cold water pipe (31) to the hot water pipe (21), as well as in the opposite way. Likewise, it is possible that first means for regulating the flow (76) in the bypass line (75) are arranged on the side of the pump (74) corresponding to the cold water (31) and, therefore, second flow regulation means (76b) arranged on the bypass line (75) would be situated on the hot water side (21).

Additionally, according to figure 1, which shows a device for saving hot water, it is possible to include the following elements to the components of the device:
- a first pressure or flow meter (79), for example a flow meter, flow switch or pressure switch, arranged in the hot water supply section (21) upstream from the bypass (75), before a solenoid valve (78) which is normally open;
   and
- third water flow regulation means (78) situated between the bypass line (71) and the connection with the tap (60), preferably a solenoid valve (78) which, in combination with first flow regulation means (76) of the bypass line (75), allow for the passage through the bypass line (75), either through the hot water supply section (21) downstream from the bypass line (75) and the pressure or flow meter (79), or cut the water coming from the hot water branch (21).

The arrangement of the first pressure or flow meter (79) in the hot water supply section (21) upstream from the bypass (75), allows:
- The saved water flow to be measured, and
- The energy saved to be measured, by exchanging information with the first temperature measuring means (77).
Moreover, with respect to solutions in the state of the art, a pressure switch to measure the water pressure is no longer necessary, given that since pressure disappears, it is measured by the flow.

The set of components, together with the aforementioned control system (18), allows for the analysis of the values provided by the flow or pressure meter (79) and the thermal contact or temperature sensor (77), which, in turn, controls the pump (74), the flow regulation means (78, 76) being conveniently connected to an energy source, preferably electric.

The control system, associated with the different electrical/electronic components for specifically regulating the operation of the same and regulating the operation of the device for preventing the proliferation of living beings or the water recirculation device in general, such as the pump, the temperature regulation means, or temperature sensor, flow regulation means, the timer and the push button, among others, makes it possible to control and record the temperatures, cycles and flows. Said control system may be connected to a server (not shown), through a communications port, either through a network or wirelessly, with the aim of being able to track the data registered as well as remotely manage the device. Acting remotely on the control system of the device, object of the invention, the activation and deactivation thereof is made possible from a control center, a mobile device, a remote control, etc. Through the connection of the control system to a remote server, it is possible to manage, control and record data, mainly of the temperature, the pipes, loops and blind branches (as well as the periodic openings thereof) of a system in which the device is installed.

In the example of **Figure 1****,** the second flow regulating means (76b) situated on either side of the pump (74) always on the bypass line (75), although preferably on the cold water side (31), consist of a non-return safety valve arranged at the intersection of the bypass line (75) and the cold water supply section (72), which also protects against the entry of particles when the pump is stopped (74).

The previous elements are integrated, as shown, in a single module (70), which may be installed next to the tap (60) or in the vicinity thereof, or even in the false ceiling through which the pipes (21, 31, 21', 31') which lead down to the tap run, having a completely neutral function, except for when hot water is requested, which is when the different components controlled and managed by the control system (18) are activated.

The bypass (75) allows for the communication of the hot water supply sections (71) and cold water supply sections (72) with the pump (74), said bypass (75) being adapted to divert water which has not reached the set temperature, circulating from the hot water section (71) to the cold water section (72).

The pressure or flow meter (79), arranged on the hot water supply section (71) or (72), according to models upstream from the bypass (75), allow the pressure or flow in the hot water supply pipe (71) to be detected, thereby preventing the pump (74) from functioning with no load, for example at a pressure greater than zero, and furthermore, as a function thereof, the control system (18) activates the device when hot water is requested from the hot water valve (60a) of the tap (60).

If there is a pressure drop in the hot water service line (21), the function of the non-return valve (76b) is to prevent the cold water, with greater pressure, from entering the hot water pipe (21) by having greater pressure than the hot water together with the pressure produced by the pump (74).

The water flow regulation means (78, 76), are preferably made up of a solenoid valve (78) or third flow regulation means arranged between the bypass line (75) and the tap (60) connection, normally open, arranged on the hot water supply section (71) downstream from the bypass line (75) and another solenoid valve or first flow regulation means (76) arranged on the bypass line (75), and normally closed.

The thermal contact or temperature sensor (77) arranged on the hot water supply pipe (71) upstream from the bypass line (75) allows the temperature of the hot water which circulates through the modular device of the invention to be controlled, such that if the previously set temperature is not reached, the solenoid valve corresponding to the first flow regulation means (76), normally closed, opens, and the other solenoid valve corresponding to the third flow regulating means (78), which is normally open, closes, and actuates the pump (74) to guarantee the recirculation of this water to the cold water section (72) passing through the non-return valve corresponding to second flow regulation means (76b) such that the water which is not yet hot is not lost down the drain, but rather runs towards the heat source, boiler or hot water source (40), and when the water reaches the set temperature, the solenoid valve corresponding to the third flow regulation means (78), normally open, allows for the exit thereof through the tap (60).

The solenoid valve corresponding to first flow regulation means (76) is normally closed and the solenoid valve corresponding to the third flow regulation means (78) is normally open, such that, in the case of a power failure, coil failure or disconnection of the system, the module (70) allows for the tap (60) to be used as a conventional tap, preventing the use of the tap and the supply of hot and/or cold water from being blocked.

Optionally, the module (70) further incorporates an advisor element, associated with the control device (18), which indicates that the open tap (60) is not yet supplying hot water, but that it will soon arrive.

Likewise, and optionally, the module (70) incorporates a "Failure in the heat source" alert, also associated with the management and control device (18), when the water does not reach the set temperature in the established time.

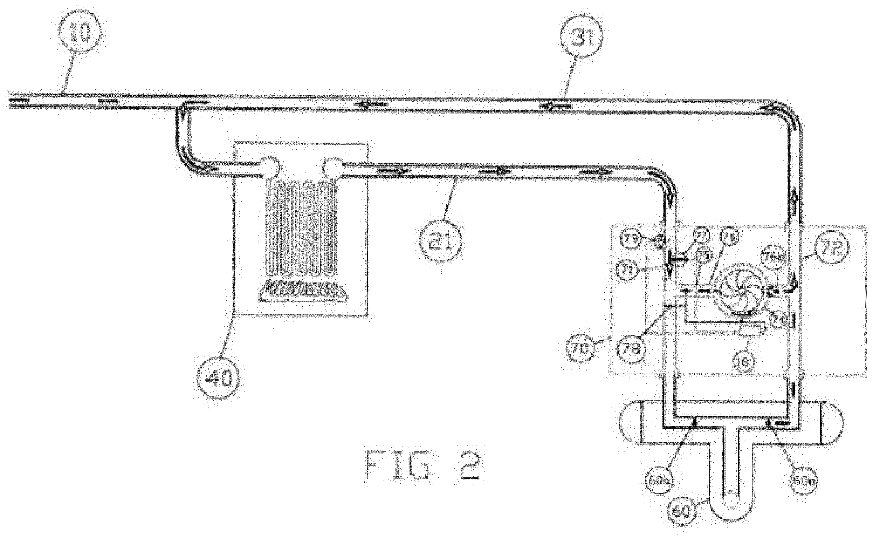

**Figure 2** schematically shows the system from the general water service line (10) to the point where the tap (60) is located, next to which the module (70) is installed, the operation of which is the following:
By opening the hot water valve (60a), the valve associated with the same causes the water contained in the hot water pipe (21) as well as the water contained in the hot water section (71) of the module (70) to begin to circulate. When the pressure or flow meter (79) detects this movement, and if the thermal contact (77) detects that the water is not at the programmed temperature, the control system (18) activates the solenoid valve corresponding to the third flow regulation means (78), closing the hot water pipe (71) downstream from the bypass (75), opening the solenoid valve corresponding to the first flow regulation means (76) in the bypass (75) and activating the pump (74) to recirculate the water to the cold water section (72) and later to the cold water pipe (31) where it returns to the main water service line (10) and where the heat source, hot water source or boiler (40), is requesting water, in order to supply the branch (71) and therethrough the pump (74) until the device detects that the water is at the set temperature and that it may be sent to the tap (60) through the hot water valve (60a) which is open and waiting for hot water, all of which is done without losing water.

And, upon reaching the set temperature measured by the thermal contact or temperature sensor (77), the control system (18) closes the solenoid valve corresponding to the first flow regulation means (76) of the bypass (75), stopping the pump (74) and opening the solenoid valve corresponding to the third flow regulation means (78) of the hot water section (71), thereby allowing the hot water at the set temperature to come out of the tap (60).

Optionally, a timer may be incorporated into the module (7) associated with the control unit (18), and it may be used to limit the time it takes the hot water to come out of the tap, installed in a way so that if the predetermined time for the opening of the tap is exceeded, the solenoid valve corresponding to the third flow regulation means (78), normally open, closes, in order to avoid the loss of water caused by possible lapsus when the hot water valve (60a) is left open without the solenoid valve opening, which corresponds to the first flow regulation means (76), which are normally closed.

Any application of this device avoids the costs of pumping to replace water, which now, coming from the hot water tap, does not go down the drain coming until it arrives hot, whereas previously water was lost while waiting for the water to heat up.

In order to prevent the proliferation of living beings, mainly bacteria and microorganisms in the system of **Figure 2****,** a system without a hot water recirculation loop, where said living beings sometimes proliferate in the stagnated water thereof over time due to a lack of use or due to a prior contamination, it is possible to include a push button (not shown) for the activation thereof, different from the ones described up to now, and connected to the control unit (18), which makes the manual activation of the device possible so that the pump of the device becomes activated and the water recirculates until reaching a previously set temperature, for example 58°, which circulates through the entire hot and cold water system, passing through the heat source, boiler or hot water source, minimizing the number of living beings in the system. Once the push button or switch has been pressed, and when the temperature sensor (77) of the device (70) has reached the aforementioned 58°C, recirculation is maintained for 5 minutes, for example, which is variable based on the system's dimensions. Temperature and time may be regulated based on the specific needs of each system, as well as on the life forms that are to be exterminated. Preferably, said push button or switch must be pressed for a certain amount of time in order to carry out the thermal treatment of the piping, for safety reasons.

Although this last example of the device for saving water and for recirculation to prevent the stagnation of water relates to saving water when hot water is drawn from the tap, depending on the climate of the area where said device is located, it might be that it is the cold water valve (60b) which is necessary to actuate beforehand, due to very hot cold water pipes (31) from exposure to a very hot climate, and therefore a device (69) opposite to that which was until now described and previously shown in **Figure 1** would be necessary, which is described below with reference to **Figure 3****.**

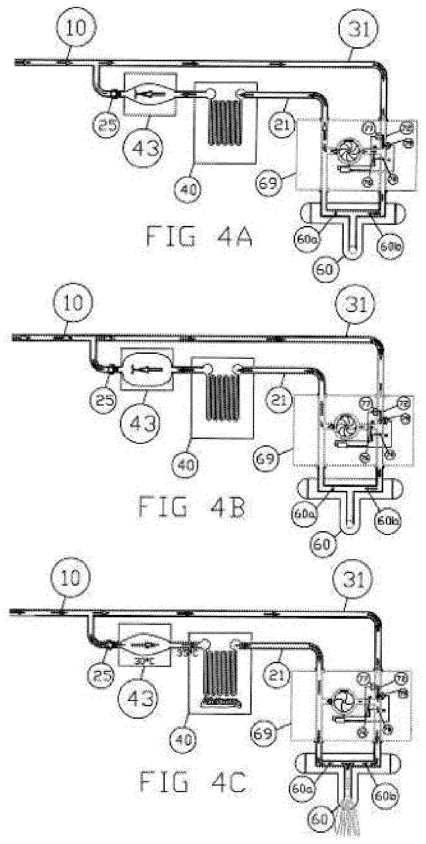

**Figure** 3 shows a device (69), object of the present invention, to be installed in areas with high temperatures, normally desert areas, where the components of the device are arranged in an inverted way to that of the previously described device. **Figures 4a, 4b and 4c** show an example of the operation of the aforementioned device in a simple water system. Specifically, water that is hot recirculates but arrives through the cold water pipe (31) to the hot water pipe (21). To compensate for the volume increase in the hot water circuit (21) it may be necessary to incorporate into said hot water circuit or first hot water pipe (21) an intermediate element for accumulating water, such as a reboiler (43), deposit or water bypass. Likewise, arranged immediately upstream from the reboiler (43) is a non-return valve (25), which prevents water coming from the cold water pipe (31) during recirculation from overflowing the reboiler (43) and returning to the hot water pipe (31).

Likewise, if it is desirable to have a device which is valid both for regulating cold water and hot water, a device with the same components on both sides of the pump (74) may be used, wherein second flow regulation means (76b) which in the preceding figures is a non-return valve (76b), in this case it would be a solenoid valve with the same functions as the second solenoid valve (76), arranged on the bypass line (75).

In other words, in this last example, the device would also have the components in **Figures 1 to 4****,** second temperature regulation means, second water flow regulation means situated downstream from the bypass line, and a second pressure or flow meter situated upstream from the bypass line (75) on the same side as the pump (74), or even using the other pump independently for each independent circuit, where second water flow regulation means are situated, located on the bypass line (75).

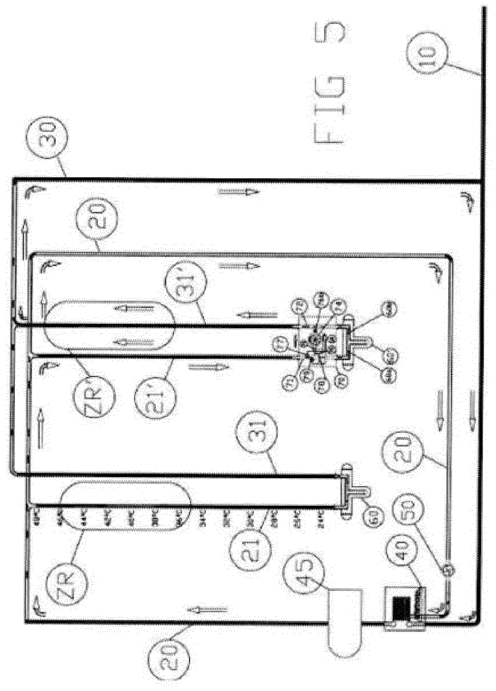

**Figure 5** shows a water system, in particular a hot sanitary water (HSW) system with permanent hot water recirculation, wherein the risks of proliferation of living beings, such as Legionella, are minimized, in risk areas (ZR, ZR'), thanks to the use of the device (70), object of the invention, and in particular due to the arrangement of a timer or programmer in the system for flushing the so-called blind branches with water. In these branches, there are optimal temperatures for the development of a breeding ground for living beings (ZR, ZR') when there is stagnated water for specific periods of time, due to a lack of use. With this device, periodically and in an automated fashion, a recirculation of these stagnated volumes is established, thereby avoiding the aforementioned risk before the same is produced, and always if the water has not been used for a specific time period.

Moreover, in addition to the main advantage of avoiding the proliferation of living beings, this device allows all of the water that was lost from the recirculation loop exiting the tap when hot water was requested to be saved, since the intermediate pipes also have to be heated before they provide hot water to the tap from which water is drawn, as well as to the contiguous taps.

The water system in **Figure 5** comprises at least a general water service line (10), a hot water recirculation pipe (20) which comes from the general service line (10), which begins and ends at a heat source or boiler (40) to heat water coming from the general service line (10), defining a hot water recirculation loop, including a recirculation pump (50) downstream, which also may be situated upstream from the heat source or boiler (40) and before, although it may also be situated after, the main hot water pipe or loop (20) connects again to the heater (40). The system also has at least one cold water pipe (30) which comes from the general service line (10). Coming from said hot water pipe (20) is at least a hot water branch (21, 21') and also at least one cold water branch (31, 31') which comes from a bypass of the cold water pipe (30), each pair formed by a hot water branch and another cold water branch (21-31, 21'-31') ending in a tap (60, 60'). Shown in this system are a first pair of branches (21, 31) and a second pair of branches (21', 31'), this second pair (21', 31') having a water circulation device (70) situated upstream from the tap (60'), between the bypasses of the pipe or hot water recirculation loop (20) and the cold water pipe (30) and said tap (60'), said recirculation device (70) connecting said pair of branches (21', 31') and further comprising a timer or programmer which activates the water recirculation device (70) during at least the necessary time from the activation of said recirculation device (70) to displace all of the water contained between the bypass between the hot water recirculation loop (20) and the hot water branch (21') of the second pair of branches (31') and the recirculation device (70). Specifically, said timer activates the water recirculation device (70) to guarantee the recirculation of the volume of water contained in the hot water branch (21') to the cold water branch (31') in the second pair of branches (21'- 31') in the direction of the cold water pipe (30).

By means of this system, wherein the first pipe or recirculation loop (20) is active, such that hot water circulates through the first pipe or loop (20) in a constant manner, and after a period of disuse in which no one has used the hot water branch (21') during a time in which the proliferation of living beings is facilitated in said branch (21'), such as Legionella or any other bacteria or microorganism, the timer or programmer of the system, in combination with the water recirculation device (70), will displace the volume of water, before the breeding ground for living beings has been developed, toward the cold water branch (31') before it may become a health risk. Said recirculation from the hot water branch (21') to the cold water branch (31') may last until:
- A temperature sensor in the recirculation device (70) detects a safe temperature, previously set or programmed, which guarantees that the system meets health standards, and/or
- It is guaranteed by a periodic or timed recirculation that all of the volume of the hot water branch (21') has been emptied and displaced to the cold water pipe (30) such that the risk of the proliferation of living beings is reduced by the volume of water displaced from the hot water branch (21') going to a lower thermal level. This periodic recirculation is done whenever the recirculation device (70) has not detected the use of hot water in the branch (21') during an established period.

By means of this system, the water from the hot water branch (21') that is warm is injected into the second cold water pipe (30).

The advantages of this system consist of preventing the proliferation of Legionella, bacteria and microorganisms, and saving water from the time the tap (60) is open to when the hot water reaches the hot water branch (21').

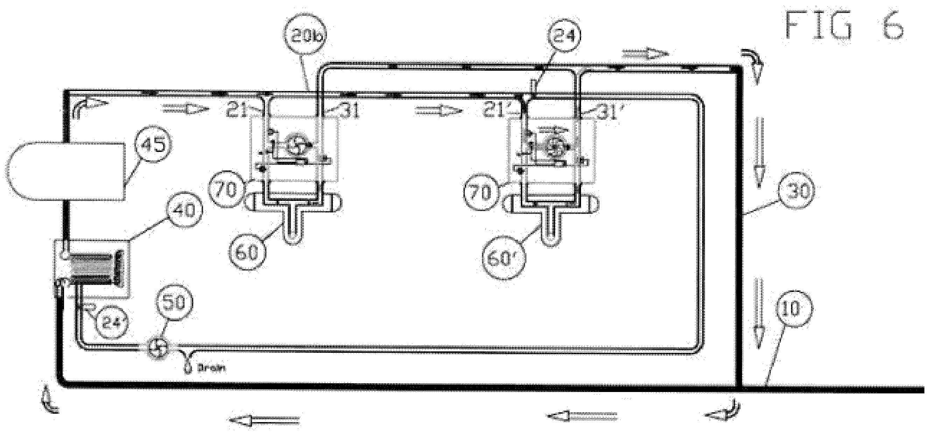

Likewise, **Figure 6** shows a diagram of a hot sanitary water system, identical to the system in figure 5, wherein the permanent recirculation of the first pipe or loop (20b) is eliminated by means of the arrangement of first sealing means (24) of said first pipe (20b) between the bypass of at least one hot water branch (21'), being the last bypass the system requires for hot water, and the heat source (40) and the arrangement of second sealing means (24') immediately before the hot water pipe (20b) returns to said heat source (40). The section between the sealing means (24, 24') therefore remains closed by cut-off valves and, likewise, it is purged or emptied by means of a purging element (D) to prevent stagnant water from existing in the system.

This way, the recirculation of hot water though the hot water pipe (20b) is inactive, converting a system with a hot water recirculation loop (20b) into a conventional water circuit for instantaneously producing hot water, similar to Figure 2. By permanently eliminating the heat source of the hot loop, the risk of proliferation of living beings is reduced, since once hot water is no longer demanded, the pipes (20b) and branches (21, 21') once again lower their temperature through a natural and simple heat loss until reaching the same temperature as the cold water pipes and branches. In this way, the values of the risk of the proliferation or existence of living beings in the hot water pipes are reduced to values similar to those of cold water pipes. Moreover, as is obvious, we avoid losing large volumes of water before it arrives hot through the hot water pipe (20b) thanks to the perfected device (70) of the present invention, installed in Figure 6 between the second pair of branches (21', 31'), the device (70) incorporating the other aforementioned components intended to save water and energy.

Therefore, the advantages of this system are:
- Preventing living beings and reducing the risk of the same by converting the system into an instantaneous hot water producing system, with low risk, in comparison to circulation systems which are considered high risk,
- Saving thermal energy which is no longer consumed by annulling the permanently hot loop (20) of Figure 5 and converting it into the hot water pipe (20b) which will only be hot when hot water is requested,
- Saving refrigeration energy which is commonly used in hot geographic locations to combat both the ambient heat and the heat generated by the hot water recirculation loop (20) in Figure 5,
- Saving electric energy by not having a pump (50) running 24 hours a day for recirculating hot water, and
- Saving water.

Additionally, not having to replace water lost down the drain with new water from the supply network in many cases leads to a decrease in the pumping expenses, which exists in many systems.

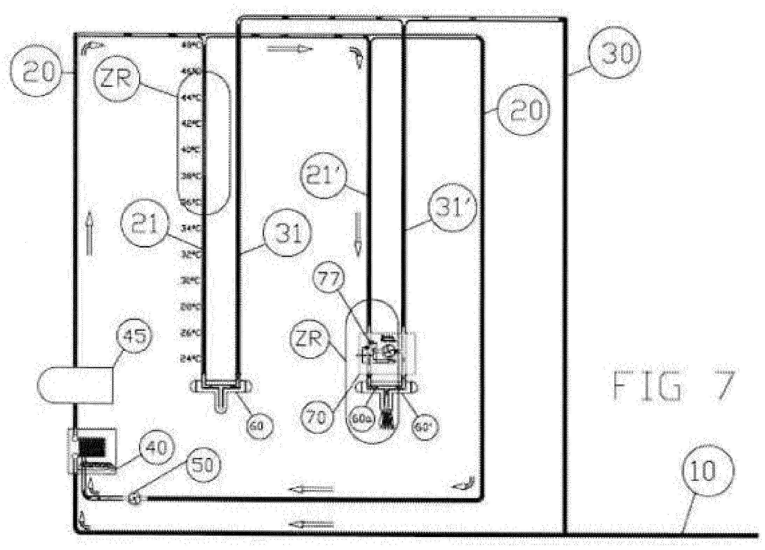

**Figure 7** shows an installation similar to the one in **Figure 5****,** meaning with a hot water recirculation loop (20), the difference being that the activation of the water recirculation device (70) causes the tap (60) to open to force out at least water contained in the hot water branch or first branch (21'). By means of this system, if no one has used the hot water pipe for a specific period of time, to flush out the volume of water in the hot water branch (21') where the living beings may comfortably exist, for example Legionella or other microorganisms, in the areas of proliferation (ZR), said volume of water is released through the hot water tap (60). Therefore, it is necessary to leave said hot water tap (60a) open, such that the water recirculation device (70) may control the closing and opening of the same by means of opening and closing the third flow regulation means (78) arranged in said recirculation device (70) and activated by the timer or programmer of the installation. Said third flow regulation means (78) arranged in the recirculation device may remain open, once activated, until the temperature of the water coming out of the tap reaches the necessary temperature, and for the necessary time, for reducing the content of living beings. Once the aforementioned temperature has been reached, a temperature which has been previously set, or once a specific period of time has gone by, third flow regulation means (78) will close and the system will be remain ready to be used.

This system is particularly useful when the tap (60) will not be used for extended periods of time, such as during the off-season for hotels, when the hotel is closed, in hospitals or in houses with rooms not in use, in which the tap is, therefore, not used. The system may be activated by manual activation using a timer or programmer, or by programming said timer or programmer.

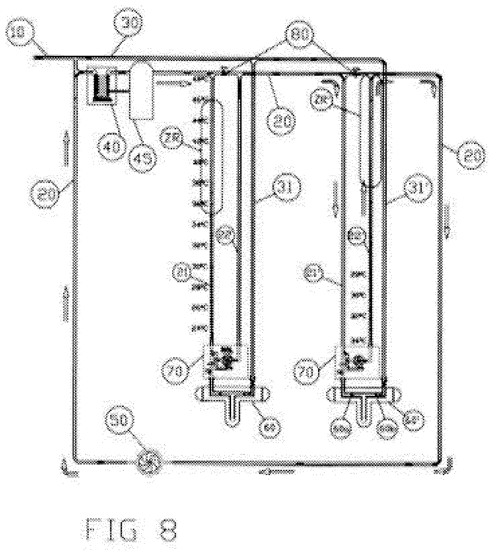

**Figure 8** shows a fourth water system in buildings for preventing the stagnation of water and the proliferation of living beings in the water pipes thereof (ZR, ZR') by means of recirculation of water in the branches, from the hot water branch (21, 21') to a new, second intermediate recirculation branch (22, 22'), also of hot water, thereby displacing the water towards the hot water pipe or the recirculation loop (20). With respect to previous systems, the second branch is a pipe (22, 22') arranged between a bypass of the hot water pipe or recirculation loop (20) and the water recirculation device (70), and the cold water loop (31, 31') is a pipe from a bypass of a main cold water pipe (30) and the tap (60).

Specifically, this system incorporates a second branch (22, 22') which extends from a bypass in the hot water pipe or recirculation loop (20) to the recirculation device (70) such that it creates a small circuit between the hot water branch (21, 21'), the recirculation device (70) and the second branch (22, 22') arranged between said recirculation device (70) and the recirculation loop (20). By means of this system, and if users have not made use of the hot water, to prevent the proliferation of living beings in the risk area (ZR), the recirculation device (70) pumps the volume of water contained in the hot water branch (21, 21') to said recirculation device (70) and this entire volume of water will return through the new added second branch until said volume of water and the content of the second branch (22, 22') are incorporated from the hot water recirculation loop (20) and also in the direction of the boiler (40) or boiler (40) plus accumulator (45), where, due to the temperature thereof, the population of the aforementioned living beings will be reduced.

The actuation of the recirculation device (70) may be done by opening the hot water valve (60a).

To prevent the volume of water flushed out through the new second branch (22, 22') from entering again through the recirculation loop (20) in the hot water branches (21, 21'), it is possible to place non-return valves (80) between both bypasses (21, 22 and between 21', 22') in the hot water recirculation loop (20).

The main advantages of this system consist of preventing the development of living beings, such as microorganisms and bacteria, and saving water.

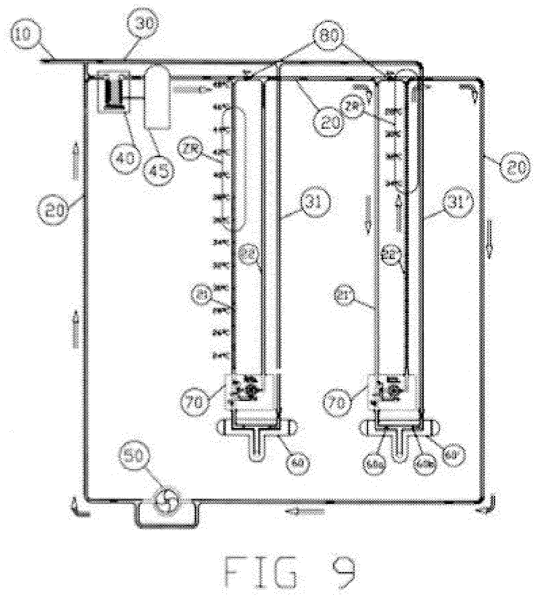

**Figure 9** shows a fifth water system in buildings for preventing the stagnation of water and the proliferation of living beings in the water pipes thereof (ZR) by means of recirculation of water in the branches, from the hot water branches (21, 21') to second or intermediate recirculation branches (22, 22'), also hot water, thereby displacing the water towards the hot water pipe or the recirculation loop (20f), in this case turned off, which comprises non-return valves (80) to make the displacement of water of the hot water branches (21, 21') to the boiler (40) possible. Specifically, situated in the recirculation loop (20f) are non-return valves (80) after the bypasses to the hot water branches (21, 21') and before the return bypasses (22, 22'). The recirculation pump (50) in this case may be stopped or bypassed, and the pumps (74) of the devices (70) guarantee the movement of these volumes thanks to the anti-return valves (80) in the direction of the boiler (40) or the boiler (40) and accumulator (45), where they will receive the heat shock which reduces the microbial population.

The advantages of this system are the reduction of energy costs (electric, gas and refrigeration), and a safer system with respect to the proliferation of living beings, by going from a system with a permanent hot recirculation loop to a system for instantly heating water, saving water and, additionally, forcing all of the water of the branches to occasionally pass through the boiler.

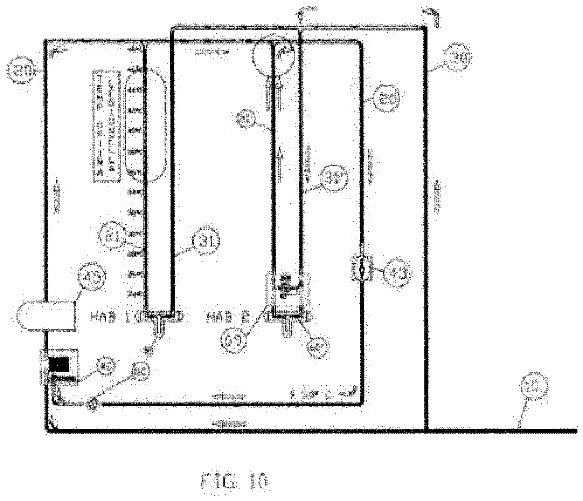

In the systems described in **Figures 5 to 9** the device for the recirculation of water (70) is preferably one in accordance with **Figure 1****,** while that of **Figure 10** described below shows a sixth water system in buildings for preventing water stagnation and the proliferation of living beings in the pipes thereof (ZR') by means of the recirculation of water in the branches, from the cold water branch (31') to the hot water branch (21') by means of a recirculation device (68) as shown in **Figure 3****.** In this system, which is similar to the system in figure 5, but different therefrom and from the previously described systems, water is recirculated from the second branch or cold water branch (31') to the first branch or hot water branch (21') such that the volume of water of said first branch (21') is pushed towards the hot water loop (20).

In this system it is possible that a water accumulating element (43) is necessary, arranged in the recirculation loop (20) to absorb the variations in the volume of water in said loop (20) due to the introduction of additional water, for which there temporarily might not be room for in said loop (20).

By using conventional pipes in a construction with recirculation, this system ensures that the volumes of water contained in the branch (21) where there may be a development of living beings are cauterized in the loop (20), or enter the boiler (40) or accumulator (45) with a simple injection of cold water to displace these potentially dangerous volumes.

In addition to the functions described, the recirculation device (70) prevents the water inside many of the described figures, with or without recirculation, the pipes and branches of a hot or cold sanitary water system, from freezing during winter periods when the system is not in use. Therefore, if the temperature measured by the temperature sensor is such that there is a risk of the pipes freezing (by a previous determination of said temperature), the device is activated, the boiler starts up, if it is connected, hot water circulates through the system until exceeding the temperature constituting a risk of freezing which may cause cracks in the pipes. If, on the other hand, the boiler or heat source cannot be activated, due to a lack of fuel or if it is turned off, for example, the pump of the device will start up regardless, and initiate the recirculation of water through the system, such that this recirculation, together with the heating of the water caused by passing through the pump, regardless of which system it is and the exposure thereof to the cold, will be sufficient to prevent the water in the pipes from freezing. In accordance with the previously mentioned points, a water system is formed which may be any of the previously explained systems, wherein the water recirculation device (70), which comprises the pump of the device (74) and means for measuring the temperature, or sensor, which activate the pump (74) of the water recirculation device (70) when the temperature of the water detected by the temperature regulation means is lower than a preset temperature close to freezing, such that the water of the device is displaced by means of the pump of the device (74), heating said water and preventing the freezing of the same, in combination or not with the activation of the heat source, until means for deactivating or stopping the pump (74) of the device (70) are actuated. These deactivation means may either be the same temperature means which reach a preset temperature, or a second timer which is actuated if a specific time has been exceeded and said deactivation temperature has not been reached.

## Claims

1. A device for preventing the proliferation of living beings in the water pipes of buildings, of the type the comprises at least a branch of hot water pipes (21), and cold water pipes (31), which end in at least one tap (60) made up of a single module (70) with two sections of the lines for hot water (71) and cold water (72) with connections to the hot water pipes (21) and cold water pipes (31) and with connections to the tap (60), **characterized in that** it comprises:
- A pump (74) for water recirculation installed in a bypass line (75) between the section of the lines for hot (71) and cold (72) water,
- At least first water flow regulation means (76), situated on the bypass line (75) to one side of the pump (74), either allowing or not allowing the passage of water to the pump,
- At least second water flow regulation means (76b) situated on the bypass line (75), where the first water flow regulation means (76) are situated, and
- A control system (18) connected at least to said first water flow regulation means (76) and the pump (74),
- At least first means for measuring the temperature (77), arranged between the connection to the pipes of the branch (21, 31) and the bypass line (75) upstream from said bypass line (75) connected to the control system (18),
- Electronic means for activating the pump, connected to the control system, which activate or start up the pump, and
- Electronic means for deactivating the pump, connected to the control system which deactivate or stop the pump.

2. The device, according to claim 1, **characterized in that** the means for deactivating the pump are the means for measuring the temperature (77) which stop the pump when said means for measuring the temperature (77) reach a preset target temperature which is kept in the control system.

3. The device, according to claim 2, **characterized in that** the means for deactivating the pump are a first timer, connected by means of the control system, which stops the pump after it has been active for a specific period of time without reaching the set target temperature.

4. The device, according to claim 1, **characterized in that** the control system is connected to a server.

5. The device, according to claim 1, **characterized in that** the means for activating the pump are the means for measuring the temperature (77) which activate the pump when said means for measuring the temperature (77) reaches a set target temperature kept in the control system.

6. The device, according to claim 1, **characterized in that** the means for activating the pump are a manual push button connected to the control system situated in the device itself.

7. The device, according to claim 1, **characterized in that** the means for activating the pump are a second timer connected to the control system which operates at every specific set period of time in order to periodically and automatically activate the pump.

8. The device, according to claim 1, **characterized in that** the means for activating the pump are at least a remote connector, connected to the control system by means of a server.

9. The device, according to claim1, **characterized in that** it comprises:
- at least third water flow regulation means (78) situated between the bypass line (75) and the connection with the tap (60) downstream from the bypass line (75) connected to the control system (18), and
- at least a first pressure or flow meter (79), arranged between the connection with the branch pipes (21, 31) and the bypass line (75), upstream from the latter, said first pressure or flow meter (79) being connected to the control system (18), and to detect the pressure or flow of the water in the hot or cold water supply pipe and activating the second flow regulation means (76) and third flow regulation means (78) and the pump (74) when water is requested from the tap (60).

10. The device according to claim 1 and 9, **characterized in that** it comprises second temperature regulation means, second water flow regulation means situated downstream from the bypass line, and a second pressure or flow meter situated upstream from the bypass line (75) on the opposite side of the pump (74) where the means of claims 1 and 8 are situated.

11. The device, according to claim 9, **characterized in that** the pressure or flow meter (79), arranged in the hot water supply section (21) upstream from the bypass (75), is a flow switch, flow meter or pressure switch.

12. A water system for preventing the proliferation of living beings in water pipes of buildings, of the type comprising at least:
- a general water service line (10),
- a hot water recirculation pipe (20) which comes from the general service line (10), which begins and ends at a heat source (40) to heat water coming from the general service line (10), and which has a recirculation pump (50) downstream from the heat source (40) and before the main hot water pipe (20) connects again to the general service line (10),
- at least one cold water pipe (30) coming from the general service line (10),
- at least one hot water branch (21, 21') coming from a bypass of the hot water pipe (20) and at least a cold water branch (31, 31') coming from a bypass of the main cold water pipe (30), each pair formed by a hot water branch and another cold water branch (21-31, 21'-31') ending in a tap (60, 60'),
and **characterized in that** it comprises
- a device (70) according to claim 1, situated in at least one hot water branch (21, 21') upstream from the tap (60, 60') connecting at least one hot water branch (21, 21'), first branch, with another branch (31, 31', 22, 22'), second branch.

13. The system, according to claim 12, **characterized in that** the means for activating the pump of the device activate the pump of the water recirculation device (70) for the recirculation of water between the first branch (21, 21') and the second branch (31, 31', 22, 22'), or vice versa, until the control system activates the deactivation means of the pump of the device.

14. The system, according to claim 13, **characterized in that** the pump of the device is activated for at least the necessary time, based on the activation of the pump of said recirculation device (70) in order to displace all of the water contained between the bypass in the hot water pipe (20) of the first branch (21, 21') and the recirculation device (70).

15. The system, according to claim 13, **characterized in that** the pump of the device is activated for at least the necessary time, based on the activation of the pump of said recirculation device (70) so that the first temperature meter reaches a previously set target temperature in the bypass in the hot water pipe (20) of the first branch (21, 21').

16. The system, according to claim 12, **characterized in that** the activation of the pump of the water recirculation device (70) causes the opening of at least third water flow regulation means (78), arranged in the regulating device (70) and therefore the tap (60) to force the exit of at least the water contained in the first branch (21, 21').

17. The system, according to claim 12, **characterized in that** the second branch is the cold water branch (31, 31') which comes from a bypass of the cold water pipe (30) to the water recirculation device (70).

18. The system, according to claim 12, **characterized in that** it comprises a water accumulation element (43) in the hot water pipe (20) between the at least one hot water branch (21') and the pump of the system (50).

19. The system, according to claim 16, **characterized in that** the hot water pipe (20) comprises sealing means (24) for said hot water pipe (20) situated between the bypass of the at least one branch (21") and the heat source (40) and second sealing means (24') situated immediately before the hot water pipe (20) returns to said heat source (40).

20. The system, according to claim 12, **characterized in that** the second branch is a pipe (22, 22') arranged between a bypass of the hot water pipe (20) and the water recirculation device (70), and the cold water loop (31, 31') is a pipe from a bypass of a main cold water pipe (30) and the tap (60).

21. The system, according to claim 19, **characterized in that** the hot water pipe (20) comprises a non-return valve (80) between the first branch (21, 21') and the second branch (22, 22'), and **in that** the pump (50) is annulled.

22. The system, according to claim 13, **characterized in that** the means for activating the pump of the device (70) are the means for measuring the temperature which activate said pump of the device when the temperature of the water detected by the same is lower than a preset temperature close to freezing, such that the water of the device is displaced by means of the pump of the device (74) heating said water and preventing the freezing of the same, until means for deactivating the pump of the device are actuated.
